Europäisches Patentamt

European Patent Office

Office européen des brevets

(19)

(11) Publication number: **0 257 717**
**A2**

# EUROPEAN PATENT APPLICATION

(21) Application number: **87201591.2**

(22) Date of filing: **21.08.87**

(51) Int. Cl.4: **A21C 5/00**

(30) Priority: **22.08.86 NL 8602143**

(43) Date of publication of application:
**02.03.88 Bulletin 88/09**

(84) Designated Contracting States:
**AT BE CH DE FR GB IT LI NL**

(71) Applicant: **Van der Pol Oven- & Machinebouw B.V.**
**Röntgenweg 3**
**NL-3752 LJ Bunschoten(NL)**

(72) Inventor: **van der Pol, Jan Theo,**
**Vivaldiweg 13,**
**NL-3752 HA Bumschoten,(NL)**

(74) Representative: **Smulders, Theodorus A.H.J. et al**
**Vereenigde Octrooibureaux Nieuwe Parklaan 107**
**NL-2587 BP 's-Gravenhage(NL)**

(54) A method of dosing portions of dough and a system for performing this method.

(57) A method of dosing dough portions on a baking surface to be introduced into an oven, in which the dough portions, all essentially of equal volume, are deposited from a dosing device in juxtaposed rows on the baking surface, the volumes dosed by said dosing device being controllable. One of the dough portions in a row is deposited on a weighing device arranged outside the baking surface, after which the weight of said portion is determined. There is derived from the weight a control signal being a measure for the weight, said control signal being adapted to control the volumes dispensed by the dosing device.

## A method of dosing portions of dough and a system for performing this method.

This invention relates to a method of dosing portions of dough on a baking surface to be introduced in an oven, with the dough portions, all essentially of equal volume, being deposited from a dosing device in juxtaposed rows on said baking surface, the volumes dosed by said dosing device being controllable.

In the production of baked products, such as all kinds of biscuits, wafers and the like, which are presented to the consumer in a package, the producer is bound by law to ensure that each package contains the so-called guaranteed weight.

In the baking process, use is made of volume dosing machines which dose from dosing cylinders the portions of dough to be baked in predetermined volumes and deposit the portions row after row on a griddle or a steel belt, after which the griddle or steel belt enters the oven. A problem occurring with such volume dosing machines is that the specific density of the dough is not always constant, due among other things to temperature variations of the dough and changes in its composition, so that a regular adjustment of the volume of the cylinders in the dosing machine determining the volume of the dough portions is necessary.

However, adjustment of the volume of the dosing cylinders of the volume dosing machines cannot take place until it has been found that the product obtained after the entire baking process has a deviating weight so that the actual adjustment is far behind the actual desired moment of adjustment. To ensure that the resulting baked product nevertheless always meets the guaranteed weight, an overdosing of the unbaked dough is used in the production of such baked products, i.e. more unbaked dough than strictly necessary is introduced into the oven. This overdosing is often 7 to 8% and for certain types of dough as much as 10 to 15%. The result is that each package will certainly contain the guaranteed weight but mostly more, which is detrimental to the producer, since he has to buy and use more ingredients than is strictly necessary, so that the cost price of the product rises unnecessarily.

This problem can be removed by measuring the weight of the dough portions to be supplied to the oven, thereby enabling the dosing machine to be provided with a feedback signal through which the volumes of the dosing cylinders thereof can be readjusted. Such a method is naturally possible only when the correlation between the weight of an unbaked dough portion and the weight of the product obtained therefrom after the baking process is accurately known. The temperature control in modern ovens, however, is so accurate that this correlation could be accurately established, while this correlation can also be kept constant.

In a known method of determining the weight of the dough portions being deposited on a griddle by a dosing machine, the known weight of an empty griddle is subtracted from the weight of a griddle filled with dough portions. From this can then be calculated the total weight of all dough portions and hence the average weight of a dough portion. However, this method is inaccurate, since the weight of the dough is light relative to the weight of the griddle and since there are differences in weight between the griddles mutually. Moreover, this method is elaborate, since a full griddle always has to be weighed before entering the oven.

When use is made of a steel belt oven for baking the dough portions, with dough portions being deposited on a steel belt by a dosing machine in a continuous process, the known method is unusable, since it is impossible in such an oven to weigh the weight of the steel belt or of a portion of the steel belt after dough portions have been deposited thereon.

It is an object of the present invention to provide a method enabling to accurately determine the weight of the dosed quantities of dough immediately during the dosing step both in the case of dosing dough on a griddle and on a steel belt, without requiring substantial investments in weighing and/or control apparatus.

To that end, the present invention provides a method of the above type in which one of the dough portions of a row is deposited on a weighing device arranged outside the baking surface, after which the weight of that portion is determined and a control signal is derived from the weight that is a measure for the weight, by means of which control signal the volumes dispensed by the dosing device can be regulated.

To enable the performance of the method according to the present invention, the dosing machine is fitted with a dosing cylinder depositing a dough portion not on the steel belt or griddle but beside it, on a weighing device. To that end, the dosing machine can be provided with an additional dosing cylinder, but it is also possible to reduce the number of dough portions in a row on the griddle or steel belt by one, so that such portion can be weighed. After measuring, the weighed dough portion is not lost, since this can be returned by means of a known per se device to the storage container of the dosing device.

In the method according to the present invention it is assumed that all cylinders of a dosing machine are identical, so that the volume and the weight of all dough portions in one row, deposited by the dosing cylinders on the steel belt or griddle are basically identical, too. Therefore, a measurement of the weight of one portion provides sufficient information on the weight of the other portions in one row. The weighing device is preferably designed in such a manner that it transmits an output signal proportional to the weight measured, which output signal can serve for the automatic adjustment of the useful volume of the dosing cylinders of the volume dosing machine. Naturally, it is sufficient to adjust the useful volume of all dosing cylinders to the same extent.

The output signal of the weighing device can readjust the dosing cylinders through the control unit of the volume dosing machine or can be applied to a central control unit controlling, in addition to the volume dosing machine, all functions of the oven. It has been found that a random check of the weight of the dough portions is sufficient.

Therefore, it is possible according to the present invention to automate the random checks, with the repetition frequency being set randomly to suit requirements through the control unit of the volume dosing machine or through the central control unit of the oven.

The method according to the present invention has the substantial advantage that it can be performed without any problem with both a steel belt oven and griddles, that it is very rapid, since the readjustment of the volume of the dosing cylinders can take place between the deposition of two rows of dough portions on the steel belt or griddle, and that the measurement of the weight takes place at the entrance of the oven, i.e. before the dough is baked, and not at the exit of the oven, which would result in a substantial delay. The determination of the weight can take place at the entrance of the oven since, as mentioned above, the progress of the baking process can be controlled highly accurately.

The present invention also provides a system for dosing dough portions on a baking surface to be introduced in an oven, comprising a dosing device having a storage container for dough and a plurality of dosing cylinders from which dough portions, all essentially of equal volume, can be deposited in juxtaposed rows on the baking surface, there being provided means for controlling the volume of the dough portions dispensed by the dosing device, a weighing device placed outside the baking surface, a dosing cylinder adapted to deposit a dough portion on said weighing device and means for deriving from the weight measured a control signal being a measure for the weight and for applying said control signal to the control means for the volume.

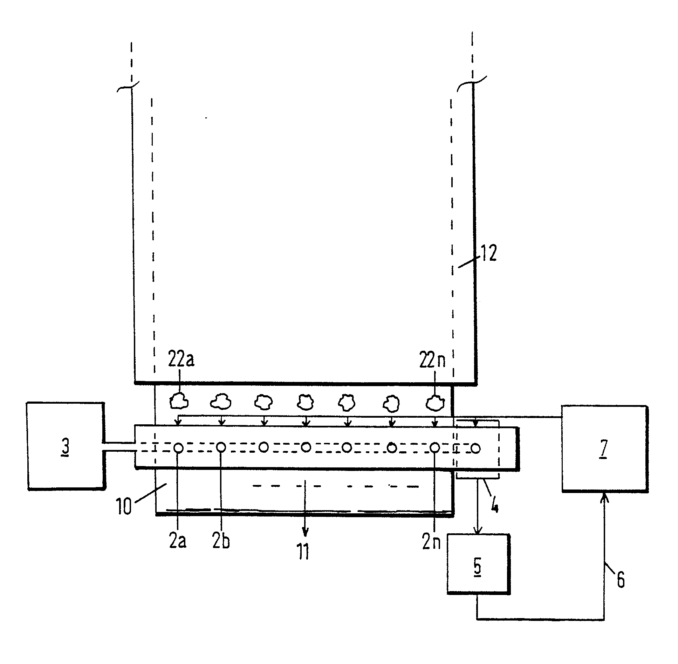

One preferred embodiment of the system according to the present invention will now be described, by way of example, with reference to the accompanying drawing, which diagrammatically shows a system for performing the method according to the present invention. The figure diagrammatically shows the entrance end of a steel band oven having a volume dosing device 1 provided with a storage container 3 from which dough is supplied to a random number of dosing cylinders 2a-2n and an additional dosing cylinder 2n + 1. Beside the dosing device, in line therewith, there is arranged a weighing device 4. The dosing cylinders 2a-2n deposit dough portions, such as portions 22a-22n, on a steel belt 10 sliding in the direction of the arrow 11 into the steel belt oven 12. Dosing cylinder 2n + 1 deposits a similar dough portion to those dispensed by the dosing cylinders 2a-2n, onto the scales of the weighing device 4 placed next to the steel belt 10, where the weight of this portion is determined. After weighing, the dough portion is returned from the weighing device 4 via a known per se device in a manner obvious to one skilled in the art to the storage container 3 of the dosing device 1.

Reference numeral 5 designates a known per se converter transmitting an output signal proportional to the weight of the dough portion that has been deposited on the weighing device 4. Via a line 6, said output signal is supplied to the control unit 7 of the volume dosing machine 1, said unit being adapted to control in known per se manner the volume of the quantity of dough dispensed by each dosing cylinder 2a)2n + 1. When the weight measured by the weighing device 4 is equal to the desired weight of a dough portion, naturally no readjustment of the quantity of dough dispensed by the dosing cylinder need take place. Readjustment takes place only in the case of deviations in the desired weight. It will be clear that the method according to the present invention can be used with the same effect both in steel belt ovens and in conventional griddles.

## Claims

1. A method of dosing dough portions on a baking surface to be introduced into an oven, in which the dough portions, all essentially of equal volume, are deposited from a dosing device in juxtaposed rows on the baking surface, the volumes dosed by said dosing device being controllable, characterized in that one of the dough portions in a row is deposited on a weighing device arranged outside the baking surface, after which the weight of said portion is determined, and there is derived from the weight a control signal being a measure for the weight, said control signal being adapted to control the volumes dispensed by the dosing device.

2. A method as claimed in claim 1, characterized in that a dough portion is deposited on the weighing device only in specific rows of dough portions.

3. A method as claimed in claim 1 or 2, characterized in that the dough portion deposited on the weighing device is returned, after the weighing, to a storage container associated with the dosing device.

4. A method as claimed in any of claims 1-3, characterized in that a dough portion pertaining to one row is weighed and the control signal is applied to the dosing device before the next row of dough portions is deposited on the baking surface.

5. A system for dosing dough portions on a baking surface to be introduced into an oven, comprising a dosing device having a storage container for dough and a plurality of dosing cylinders from which dough portions, all essentially of equal volume, can be deposited in juxtaposed rows on the baking surface, there being provided means for controlling the volume of the dough portions dispensed by the dosing device, characterized in that there is provided a weighing device placed outside the baking surface, that the dosing device is provided with a dosing cylinder adapted to deposit a dough portion on the weighing device and that means are provided for deriving from the weight measured a control signal being a measure for the weight and for applying said control signal to the control means for the volume.

6. A system as claimed in claim 5, characterized in that the baking surface is a continuous steel belt traversing a tunnel oven.

7. A system as claimed in claim 6, wherein the dosing device is placed adjacent one end of the tunnel oven above the steel belt, with the dosing cylinders in a row transverse to the longitudinal axis of the steel belt, characterized in that the weighing device is placed next to the side of the steel belt, in line with the dosing device.